# EUROPEAN PATENT SPECIFICATION

(11) **EP 1 799 039 B1**
(45) Date of publication and mention of the grant of the patent: **06.08.2014**
(21) Application number: 05799529.2
(22) Date of filing: 11.10.2005
(51) Int. Cl.: A23D 9/00, A23L 1/221, A23L 1/01

(54) **USE OF COCOA BUTTER IN CULINARY PREPARATIONS**
VERWENDUNG VON KAKAOBUTTER IN KULINARISCHEN GERICHTEN
UTILISATION DE BEURRE DE CACAO DANS DES PREPARATIONS CULINAIRES

(30) Priority: 11.10.2004 FR 0410716; 15.02.2005 FR 0501508; 04.05.2005 US 677343 P
(43) Date of publication of application: 27.06.2007
(73) Proprietor: Barry Callebaut AG, 8005 Zürich (CH)
(72) Inventor: BERTRAND, Philippe, F-78870 Bailly (FR); MARAND, Philippe, F-78370 Plaisir (FR); DUBOIS, Jérôme, F-62155 Merilmont (FR)
(74) Representative: Peaucelle, Chantal
(86) International application number: PCT/EP2005/011652
(87) International publication number: WO 2006/040195

(56) References cited:
- EP-A- 0 237 162
- EP-A- 0 547 551
- WO-A-91/12304
- WO-A-2004/017744
- DE-A1- 2 001 751
- GB-A- 643 508
- US-A- 4 105 801
- US-A- 4 156 030
- DATABASE FSTA [Online] INTERNATIONAL FOOD INFORMATION SERVICE (IFIS), FRANkFURT-MAIN, DE; 1986, JAYACHANDRA K ET AL: "Laboratory preparation of cocoa butter from indigenous cocoa beans." XP002360712 Database accession no. 87-1-12-k0008 & JAYACHANDRA K ET AL: JOURNAL OF THE OIL TECHNOLOGISTS' ASSOCIATION OF INDIA 1986 OIL TECH. RES. INST., vol. 18, no. 3, 1986, page 92, ANANTAPUR-515 001, INDIA
- DATABASE WPI Section Ch, Week 198725 Derwent Publications Ltd., London, GB; Class D13, AN 1987-173682 XP002395494 & JP 62 104563 A (WAKODO KK) 15 May 1987 (1987-05-15)

## Description

The present invention relates to flavoured cocoa butter and the use thereof in various culinary preparations, in particular as a replacement for dairy butter. In particular, the invention relates to the use of cocoa butter for cooking foods, for preparing all sorts of seasonings, for the manufacture of sauces, soups, doughs (for tart, for coating and the like), in order to improve the preservation of foods, etc.

Dairy butter has nowadays certain disadvantages:
- Hydrated at 16%, it is subject to bacteriological contamination.
- During cooking, it darkens easily. It is then harmful to health. It is customary to clarify dairy butter in order to limit darkening.
- Finally, it has a very pronounced taste which sometimes masks that of the food which it accompanies.

WO 2004/017744 discloses edible fat compositions comprising cocoa butter as a culinary aid.

GB 643508 discloses cocoa butter is heated to ca. 32°C and then mixed with vanilla oils.

The work carried out by the inventors has led them to find a substitute material which satisfactorily meets the requirements of consumers.

The invention therefore relates to cocoa butter flavoured by taste transfer and the use thereof in culinary preparations, in particular as a replacement for dairy butter and oils.

Indeed, cocoa butter not being hydrated, it is more consistent with hygiene standards. Furthermore, its burn temperature (temperature at which it burns) being markedly higher than that of dairy butter, it darkens very rarely during cooking (see example 1). Additionally, cocoa butter is more heat stable compared to pan frying butter, olive oil and pan frying fat, which results in less negative taste and health components formed (see example 2). Finally, it reveals the tastes and odours of foods because the taste and the odour of cocoa butter are more neutral than those of oils or of dairy butter. Moreover, it impermeabilizes the preparation which is the subject of the cooking, which avoids any moistening by air of the preparation after the said cooking. Likewise, aqueous foods, such as fish or red meat, do not become dehydrated or do not lose their blood during cooking. Advantageously, the "juices" present inside the food to be cooked are preserved by virtue of the production of a MAILLARD reaction. A nice caramelization of the food is thus obtained. From an economic point of view, the loss of product caused by cooking foods is reduced. A saving is therefore made on the product.

It is possible to prepare the foods to be cooked by dusting them with flavoured powdered cocoa butter, seasoned or unseasoned, and then storing them for a certain period in the refrigerator or the freezer. A setting up is thus achieved as a result which makes it possible to reduce the preparation time.

The cocoa butter powder form may be obtained for example by cryogenic treatment of the cocoa butter. Such a process is described in application EP0934110.

Cocoa butter may also be used to preserve foods (fruit, vegetables, meat, flavourings and the like). In particular, foods are introduced in melted cocoa butter and kept therein for at least 24h. Advantageously, the method cocoa butter is heated at a temperature of about 100-170°C, preferably 130-150°C, and removed from heat before use.

The preserved and glazed foods can be removed from the preparation by heating it to around 30-35°C. In this case, foods preserved and glazed in cocoa butter have a cleaner and less fatty taste than foods preserved by the customary techniques.

In particular, when foods such as garlic, onion or shallot are preserved, a taste transfer occurs. Cocoa butter having a very neutral taste, it is particularly suitable for becoming impregnated with the tastes of other foods. Accordingly, it is a product of choice for producing seasonings.

According to the invention, a cocoa butter flavoured by taste transfer is provided, said transfer resulting from a process comprising the steps of:
- Heating cocoa butter to 100-170°C, preferably 130-150°C,
- Removing it from heat,
- Adding the flavouring product, and
- Keeping it therein for 5 to 15 days, depending on the desired intensity of the flavour.

According to one embodiment, the inventions relates to a composition in powder form consisting of cocoa butter such as above defined with spices to produce seasonings.

Advantageously, the spices introduced are, individually or as a mixture, salt, peppercorns, fresh herbs, dried herbs, deep-frozen fresh herbs, nuts, bark, seeds, roots, fruit, vegetables, condiments, dehydrated sauce bases.

By way of example, there may be mentioned various sorts of pepper (green, grey, black, Jamaica, Szechuan and the like), coriander, parsley (for making a "Maître d'hôtel" type butter for example), basil, thyme, rosemary, oregano, dill, chive, tarragon, nutmeg, cinnamon, ginger, clove, cardamom, aniseed, fennel seed, mustard seed, cumin seed, celery, carrot, orange, lemon, mustard, gherkin, chilli pepper, paprika, curry, bouquet garni, chicken stock, seafood stock and the like.

The use of powdered cocoa butter compositions such as above defined, blended with one or more spices saves time during seasoning of preparations.

The invention also relates to food sprinkled with the flavoured cocoa butter such as above defined, in powder form or with a composition with spices as above mentioned.

Moreover, when foods are coated with powdered cocoa butter and spices, said spices stay where they are. On the contrary, when foods are cooked with other fats, spices used to migrate, due to the liquid phase or the water content of these fats, said water content being evaporated before frying. Furthermore, the crystalline structure of powdered cocoa butter makes it possible to obtain a new product texture and therefore a new mouth feel and a new decorative component. By way of example, vinaigrette prepared from powdered cocoa butter makes it possible to obtain both a powdered decoration on the salad and a cool mouth feel (melting of the cocoa butter crystals).

By virtue of its capacity to become impregnated with tastes, cocoa butter may be advantageously used for the preparation of broths, in particular dehydrated broths.

The invention also provides a process for the preservation of a foodstuff, characterized in that the food is coated with cocoa butter before preservation. Advantageously, the food is coated with seasoned powdered cocoa butter, before preservation. Alternatively, the food is coated with a water and cocoa butter emulsion before preservation, said emulsion being seasoned.

According to another embodiment, the invention also relates to a process for cooking a foodstuff characterized in that the food is sprinkled with the above disclosed flavoured cocoa butter, in powder form, or with the composition such as above defined, before being placed in contact with a source of heat.

The invention will be understood more clearly in the light of the examples which follow.
Examples 1-4 (A and B, C, c)), 5 (A and B), 6-8 and 9 are given to illustrate the invention but are not part of the invention.

### Example 1: Powdered cocoa butter and temperature test

| Fat | Softening temperature | Melting temperature | Smoke point | Burn temperature | Price of the material |
|---|---|---|---|---|---|
| Dairy butter | 18°C | 25°C | 100°C | 130°C | 5 € |
| Clarified dairy butter | 12°C | 20°C | 130°C | 160°C | 8 € |
| Groundnut oil | / | / | 200°C | 290°C | 2 € |
| Powdered cocoa butter | / | 35°C | 200°C | 230°C | 9.5 € |

It is observed that cocoa butter has a burn temperature which is markedly higher than that of dairy butter. Cocoa butter therefore darkens very rarely. Now, the darkening of dairy butter is harmful to health. Furthermore, as it is possible to obtain a higher cooking temperature without darkening of the cooking fat, cocoa butter makes it possible to sear foods at a higher temperature and to thus preserve the juices and the moisture.

### Example 2: Pan frying analysis

The following products were subjected to a pan frying test and analyzed for lipid degradation:
1. Cryogenized cocoa butter (M)
2. Pan frying fat; (F)
3. Olive oil; Extra Virgin; (O)
4. Pan frying butter (B)

### 1. Pan frying test

The pan frying products were heated in a pan until the set temperature (165°C or 200°C) was reached. Then the pan frying products were transferred into an inox recipient in an oil bath and kept at the set temperature (165°C or 200°C) for 10 minutes. Afterwards the products were cooled down in an ice bath and frozen at -18°C until further analysis. Each of the pan frying tests were performed in triplicate.

The whole set of experiments was repeated with addition of 5 ml of beef liquid at the heating stage.

### 2. Chemical analysis

Three different parameters for lipid degradation were assessed.

Lipid oxidation is one of the major causes of lipid degradation, and leads to oxidative rancidity and formation of off-odors and off-flavors. The potential for lipid oxidation of the frying products was assessed by measuring peroxide values (P.O.), a measure of primary oxidation products (peroxides) and p-anisidine values (p-AV), a measure of the secondary oxidation products (e.g. aldehydes).

Lipid hydrolysis (lipolysis) is measured by determining the free fatty acid (FFA) content of fats. Lipolysis causes hydrolytical rancidity.

All chemical analyses were performed in duplicate. For samples F and B a fat extraction was performed prior to the chemical analyses. The following methods were used:

| Analysis | Description of the method |
|---|---|
| P.O. | Titrimetric |
| FFA | Titrimetric |
| p-AV | Spectrofotometric |

### 3. Results

The data were analyzed using a general linear model (SPSS) with the different chemical analyses parameters as dependent variables (FFA, P.O., p-AV) and with the type of frying medium (M,F, O, B), the temperature (165°C or 200°C) and the addition of beef liquid (yes or no) as fixed factors.

First it was checked whether there are significant (two-way) interactions between the different influencing variables (medium, temperature, beef liquid). Such an interaction between e.g. medium and temperature means that the influence of medium depends on the temperature and the influence of temperature depends on the medium. Three ways of interactions were not taken into account. If there is an interaction, the data are split up.

To estimate which mean values are significantly different a Duncan post hoc test was performed.

The values of the chemical analyses prior to frying are given for comparative purposes but are not taken into account for the statistical analyses.

### Change in free fatty acids composition (lipolysis products)

Table 1 gives the free fatty acid values of the four media before pan frying.

**Table 1**

| Medium | FFA before pan frying |
|---|---|
| M | 1.50 ± 0,00 |
| F | 0.08 ± 0.001 |
| O | 0.23 ± 0.01 |
| B | 0.20 ± 0.002 |

The higher values for the amount of free fatty acids is obtained for M. This may be caused by a difference in refining treatment of the different frying media. In fact, some refining treatment are conducted at very high temperature which reduce FFA content below 0,1%.

For the values after pan-frying, one two-fold interaction (beef X medium) was significant. This means that the effect of the addition of beef liquid depends on the medium and the effect of the medium depends on the addition of beef liquid. To investigate the effect of medium and addition of beef liquid the data were split up. There was no significant effect of temperature.

The effect of medium was investigated with and without the addition of beef liquid.

### Without addition of beef liquid

There is a significant effect of medium on the free fatty acid value. The values for all media are significantly different: the value for M is the highest, the value for F is the lowest. The results are summarized in Table 2.

**Table 2**

| Medium | FFA after pan frying (without beef liquid) |
|---|---|
| M | 1.51 ± 0.02a |
| F | 0.21 ± 0.02b |
| O | 0.27 ± 0.03c |
| B | 0.42 ± 0.04d |

| | |
|---|---|
| a, b indicate which means are significantly different, means with the same letter are not significantly different | |

Due to pan frying the amount of free fatty acids does not increase in M and O but seems to increase in F and B (no statistical analysis could be performed).

### With addition of beef liquid

There is a significant effect of medium on the amount of free fatty acids. The values for all media are significantly different: the value for M is the highest, the value for F is the lowest. The results are summarized in Table 3.

**Table 3**

| Medium | FFA after pan frying (with beef liquid) |
|---|---|
| M | 1.59 ± 0.05a |
| F | 0.23 ± 0.03b |
| O | 0.27 ± 0.02c |
| B | 0.36 ± 0.03d |

| | |
|---|---|
| a, b indicate which means are significantly different; means with the same letter are not significantly different | |

The same remarks as with no addition of beef liquid can be made.

The effect of the addition of beef liquid can be studied for each medium separately. Only for B there is a significant effect of the addition of beef liquid: the free fatty acid value with addition of beef liquid is lower than without the addition of beef liquid.

### Peroxide value (primary oxidation products)

Table 4 gives the peroxide values of the four media before pan frying.

**Table 4**

| Medium | P.O. before pan frying |
|---|---|
| M | 0 |
| F | 0.33 ± 0.04 |
| O | 5.38 ± 0.01 |
| B | 1.04 ± 0.1 |

After pan-frying, none of the two-fold interactions are significant. Therefore the influence of medium, temperature and addition of beef liquid can be studied overall. Neither the temperature nor the addition of beef liquid have a significant effect on the peroxide value. Thus only the medium has a significant influence on the peroxide value. The peroxide value for O is significantly higher than the other peroxide values. The data are summarized in Table 5.

**Table 5**

| Medium | P.O. after pan frying |
|---|---|
| M | 1.73 ± 1.17a |
| F | 0.32 ± 0.19a |
| O | 9.08 ± 4.74b |
| B | 0.41 ± 0.27a |

| | |
|---|---|
| a, b indicate which means are significantly different, means with the same letter are not significantly different | |

When looking at the table 5 it seems that the peroxide value for M is higher than that for F and B. The difference is however not significant (see the margin of error). Concerning F and B, the peroxides have already reacted further into secondary oxidation products leading to a higher p-anisidine value (see further) but a lower peroxide value.

### P-anisidine value (secondary oxidation products)

Table 6 gives the p-anisidine values of the four media before pan frying.

**Table 6**

| Medium | p-AV before pan frying |
|---|---|
| M | 0 |
| F | * |
| O | 5.38 ± 0.01 |
| B | 0 |

| | |
|---|---|
| * analysis has not been performed | |

After pan-frying, all two-fold interactions are significant. Therefore the data were split up.

The effect of medium was investigated for each combination of temperature and addition of beef liquid.

### 165°C without beef liquid

The p-AV value of M is significantly lower than that of the three other media. Between the three other media no significant differences could be detected. The results are summarized in Table 7.

**Table 7**

| Medium | p-AV after pan frying (165°C without beef liquid) |
|---|---|
| M | 4.12 ± 0.83a |
| F | 26.00 ± 4.03b |
| O | 19.69 ± 5.81b |
| B | 20.78 ± 3.24b |

| | |
|---|---|
| a, b indicate which means are significantly different; means with the same letter are not significantly different | |

### 200°C without beef liquid

The p-AV value of M is significantly lower than that of the three other media. The p-AV of F is significantly higher than that of the other media. The results are summarized in Table 8.

**Table 8**

| Medium | p-AV after pan frying (200°C without beef liquid) |
|---|---|
| M | 7.13 ± 2.61a |
| F | 38.92 ± 1.82c |
| O | 24.73 ± 1.21b |
| B | 25.69 ± 3.41b |

| | |
|---|---|
| a, b indicate which means are significantly different; means with the same letter are not significantly different | |

### 165°C with beef liquid:

The p-AV value of M is significantly lower than that of the three other media. The p-AV of B is also significantly lower than that of F and O. The results are summarized in Table 9.

**Table 9**

| Medium | p-AV after pan frying (165°C with beef liquid) |
|---|---|
| M | 4.42 ± 2.70a |
| F | 14.47 ± 0.56c |
| O | 15.12 ± 2.12c |
| B | 10.23 ± 1.61b |

| | |
|---|---|
| a, b indicate which means are significantly different; means with the same letter are not significantly different | |

### 200°C with beef liquid:

The p-AV value of M is significantly lower than that of the three other media. All the other media are also significantly different from one another. After M, B has the lowest value, followed by F. O has the highest value. The results are summarized in Table 10.

**Table 10**

| Medium | p-AV after pan frying (200°C with beef liquid) |
|---|---|
| M | 3.43 ± 1.59a |
| F | 18.59 ± 0.76c |
| O | 22.02 ± 1.26d |
| B | 13.15 ± 0.67b |

| | |
|---|---|
| a, b indicate which means are significantly different; means with the same letter are not significantly different | |

Furthermore the effect of temperature could be studied. Due to the interactions this needs to be done for each medium separately and also for without and with beef separately. For all, but one (M with beef liquid), the value at 200°C is significantly (α = 0.1) higher than the value at 165°C. This is as expected since the higher the temperature the more oxidation will take place. No explanation can be found why this is not the case for M with beef liquid (no significant difference).

Furthermore the effect of the addition of beef liquid could be studied. For all, but one (M at 165°C) the value with addition of beef liquid is lower than the value without addition of beef liquid. In almost all cases (NOT for M at 200°C and O at 165°C) this difference is significant (α = 0.1). The fact that the difference is not significant in these two cases is probably due to the worse repeatability. The trend seen in the mean values is however the same. It was expected that addition of beef liquid might promote the oxidation, but this is not the case. A possible explanation is that the heat is preferentially used for other reactions, e.g. denaturation of proteins in the beef liquid.

### Conclusion

When pan frying with M, less degradation products are formed compared to B, F and O and this irrespective of the temperature used and whether or not beef liquid is added to the pan frying medium. This is mainly apparent for the p-anisidine value which gives an indication of the amount of secondary oxidation products, which are also the components which give rise to off-flavors and off-odors. The amount of primary oxidation products, determined by the peroxide value, is significantly lower in M compared to O. The value of M may be a little higher than that of B and F due to further reaction of peroxides to secondary oxidation products. This means that the overall oxidation is still less pronounced in M. No further lipolysis occurs in M during pan frying.

### Example 3: Powdered cocoa butter and rehydration test

### a) Cold water is incorporated into a powdered cocoa butter melted at 50°C

| Level | OBSERVATIONS |
|---|---|
| Up to 100% | Creamy paste, mayonnaise texture Coating for vegetables before cooking |
| Up to 150% | Fatty structure in a delicate liaison Warm vinaigrette or semi-stable juice |
| Up to 200% | Water/butter mixture at the limit of stability if allowed to stand Stable or unstable emulsified sauce depending on the liaison |

### b) Hot water is incorporated into 50 g of powdered cocoa butter

| TEMPERATURE OF THE WATER | QUANTITY OF WATER INCORPORATED | OBSERVATIONS |
|---|---|---|
| 50°C | 65 g | 10% is absorbed, the remainder is not miscible |
| 70°C | 65 g | 100% is absorbed White butter texture |
| 80°C | 65 g | Onset of melting Unstable emulsion |
| 100°C | 65 g | Complete melting Water/butter dispersion |

### Example 4: Cooking

### A. Sauté, fry

### a) Glazed carrots

The carrots are cut into fine slices lengthwise and then thrown directly into a hot frying pan with cocoa butter and with the chosen spice (dehydrated veal or chicken stock). Dry white wine and a small amount of lemon or orange juice are used to deglaze.

### b) Cod

Cut fish portions, sprinkle them with cocoa butter and spices. Cook at low temperature (80°C) on a tray in an oven for 20 minutes. The fish remains tender because evaporation is blocked by virtue of the cocoa butter.

### c) Courgette (spongy vegetable)

| RECIPE | Quantity | Prince | Heating T°C | Diced courgettes | Observations |
|---|---|---|---|---|---|
| Powdered cocoa butter | 4 g | 0.038 € | 140°C | 200 g | More rapid coloration |
| | | | | | Uniform coloration 4 times less fat necessary therefore less fat in the mouth |
| | | | | | Raw courgette flavour |
| Dairy butter | 15 g | 0.075 € | 120°C | 200 g | Least rapid coloration |
| | | | | | Least uniform coloration |
| Olive oil | 16 g | 0.072 € | 140°C | 200 g | Correct but long coloration |
| | | | | | Very fatty in the mouth |

### e) White meat: A 100 g chicken escalope

| RECIPE | Quantity | Price | Heating T°C | Observations |
|---|---|---|---|---|
| Powdered cocoa butter | 1 g | 0.009 € | 140°C | The powdered cocoa butter is sprinkled over the escalope before cooking and dry-cooked in a Tefal® frying pan |
| | | | | More rapid coloration |
| | | | | Uniform coloration |
| | | | | Escalope very crisp and remains so for a long time 4 times less fat needed, therefore less fat in the mouth |
| | | | | Raw chicken flavour |
| Butter | 5 g | 0.025 € | 120°C | Less rapid coloration |
| | | | | Irregular coloration |
| | | | | Pronounced buttery taste before chicken |
| | | | | Moistens quickly |
| Sunflowe r oil | 4 g | 0.006 € | 140°C | Irregular and dull coloration |
| | | | | Impression of plastic |
| | | | | Very fatty in the mouth, for a long time |

### f) Red meat: A 100 g steak

| RECIPE | Quantity | Price | Heating T°C | Observations |
|---|---|---|---|---|
| Powdered cocoa butter | 1 g | 0.009 € | 160°C | The powdered cocoa butter is sprinkled over the steak before cooking and dry-cooked in a Tefal® frying pan |
| | | | | More rapid coloration |
| | | | | Uniform coloration |
| | | | | Escalope very crisp and remains so for a long time 4 times less fat necessary and therefore less fat in the mouth |
| | | | | Raw flavour |
| | | | | Discharges less blood on standing |
| Butter | 5 g | 0.025 € | 120°C | Less rapid coloration |
| | | | | Irregular coloration |
| | | | | Pronounced buttery taste |
| | | | | Moistens quickly |

### B. Fry

### a) Celery and potatoes

Frying at 170°C, smoke point at 190-200°C.

Fried celery is a product which naturally absorbs fatty substances and their tastes.

The celeriac is cut like "pont neuf" potatoes and fried at 170°C.

Result: In the mouth no impression of fat, coloured and dry crusted appearance on the outside. Inclusion in potato crisps.

### b) Courgette

| RECIPE | Quantity before cooking | Quantity after cooking | Price loss | Heaving T°C | Group courgettes cut into slices | Observations |
|---|---|---|---|---|---|---|
| Powdered cocoa butter | 100 g | 90 g | 0.095 € | 160°C | 50 g | More rapid coloration |
| | | | | | | Uniform coloration 4 times less fat necessary therefore less fat in the mouth |
| | | | | | | Raw courgette flavour Cools twice as fast |
| Sunflower oil | 100 g | 70 g | 0.135 € | 160°C | 50 g | Correct coloration but long |
| | | | | | | Very fatty in the mouth |

### C. Cook fragile or breaded foods

### a) Fried fresh foie gras

A slice of duck foie gras is seasoned on either side (seasoning = spices mixed with powdered cocoa butter), the slice was breaded. It is then seared in a very hot frying pan. A rapid coloration of the foie gras is obtained. The slice is then placed for one minute in a microwave oven on full power. The powdered cocoa butter is first to melt, while the duck fat remains inside. There is little loss of duck fat, the liver remains very tender.

### b) Calf's sweetbread with cocoa butter

The calf's sweetbreads are seasoned using a strainer (sieve) with the chosen spices (mace, nutmeg skin) and the cocoa butter. The calf's sweetbreads are sprinkled with the seasoned cocoa butter like breadcrumbs and then they are cooked in a hot frying pan with no fat. A spice odour is released. There is roasting of the spices with dry cooking without a lot of vegetable fat. A small amount of veal stock and water make it possible to produce the sauce stock. This is clarified and then a small amount of powdered cocoa butter is added to the remainder of the cooking juice in order to make a clear juice.

### c) Turbot or dory

Dry the fillet well, salt and daub with molten powdered cocoa butter using a brush and turn over in poppy.
Heat the powdered cocoa butter in the frying pan and place the fillet on the breaded side.
Sear and finish on piano guard for a slower cooking which leaves all the qualities of the fish.
Fully cook at 48°C with a drop of milk (the appearance of a drop of collagen indicates that it is well cooked).

Advantages: the cocoa butter replaces the egg yolk and avoids making a crust. With the cocoa butter, the poppy rolls on the tongue. Furthermore, there is restoration of the tastes without modification.

### d) "Colbert" type whiting and breaded calf's sweetbreads

Cooking with cocoa butter in a frying pan in order to avoid the absorption of fat. A nice coloration is obtained with restoration of the tastes without that of the frying. Furthermore, the absorption of fat is practically zero.

The calf's sweetbread may also be sprinkled with salted powdered cocoa butter and then breaded with breadcrumbs and fried with cocoa butter.

The very fine layer of breadcrumbs is not pasty, there is no sensation of absorption or of a fatty taste.

Note: the breadcrumbs may be replaced with herb breadcrumbs.

### D. Bake in an oven

Slice the potatoes using a mandolin, daub with cocoa butter on Silpat® (silicone baking sheet), include a leaf of parsley or of tarragon between two crisps. Daub again and bake between 2 Silpat® sheets, on a grill at 140°C, for 20-25 min, depending on the coloration.

Likewise for potato corolla in a tart ring.

### Example 5: Seasoning

### A. Powdered fresh herbs with cocoa butter

Fresh herbs are blanched and chilled (tarragon, basil, dill, chive). They are centrifuged and frozen in the bowl of a Pacojet® (ice cream maker). They are then treated in the Pacojet® and stored in the freezer. In a plate, herb powder is sprinkled with a small amount of powdered cocoa butter. Crystallization occurs in the mouth, a very cool taste is produced, with an onset of melting in the mouth followed by a feeling of coolness. The texture of the powder is different.

### B. Black olive decoration and cocoa butter

Black olives are stoned, dried and coarsely chopped. Almond powder, brown sugar and powdered cocoa butter are added thereto.
In the mouth, a sensation of coolness and sweetness forms. The olive taste comes out without being aggressive.

### C. Preserved and glazed garlic and shallots

Heat cocoa butter to 140°C and then remove from heat. Put the garlic and the shallots in the heated cocoa butter and keep them therein for about fifteen days. Glazed garlic and glazed shallots are thus obtained.
The cocoa butter does not denature the product and does not give a heavy and fatty feel.
Garlic flavoured cocoa butter may also be used.

### D. Preserved and glazed red peppers

Heat cocoa butter to 140°C and then remove from heat. Put the red peppers in quarter in the heated cocoa butter and keep them therein for at least 24h. Peppers can be preserved in this preparation for many months. To remove the peppers from the preparation, heat the preparation to around 30-35°C. Preserved red pepper are thus obtained. The cocoa butter does not denature the product and does not give a heavy and fatty feel.

### E. Celery flavoured cocoa butter

Heat cocoa butter to 140°C and then remove from heat. Add the celery sticks in the heated cocoa butter and keep it therein for about fifteen days. Celery flavoured cocoa butter can then be used.

### F. Broths

It is possible to transfer tastes to cocoa butter by heating a flavour product in it.
For example, a chicken broth may be prepared by marinating chicken pieces (skin, carcass), cocoa butter and common salt for 2 h. The whole is then boiled for 20 to 40 min. This is cooled and then the broth is put through a small conical strainer.

### Example 6: Coatings, pastry and choux dough

### A. Prepare a "fritter dough"

### Fried fresh langoustine with cocoa butter

A fritter dough is prepared with the Tendura product (Thai), spices and powdered cocoa butter. The langoustines are rolled in the dough and then dipped in the hot oil. They come out very crunchy, with no frying taste. The frying oil does not go into the fritter because the addition of cocoa butter to the fritter dough impermeabilizes it.

### B. Prepare a Viennese pastry to cover a foodstuff

| *RECIPE* | Quantity | Price | OBSERVATIONS |
|---|---|---|---|
| Viennese pastry with dairy butter | | | Use in a Robot Coupe food processor |
| | | | Long preparation |
| Dairy butter | 1 kg | 5 € | Hygiene not under control |
| Breadcrumb | 1 kg | | Difficult to spread uniformly |
| Chopped Gruyère | 0.2 kg | | |
| | | | Runs and discharges fat |
| | | | Long to bake and irregular |
| | | | 1/2 cooked 1/2 pasty |
| | | | |

| *RECIPE* | Quantity | Price | OBSERVATIONS |
|---|---|---|---|
| Viennese pastry with powdered cocoa butter | | | Very rapid preparation |
| | | | Complies with the hygiene standards |
| | | | Spreads very easily and rapidly |
| Powdered cocoa butter | 0.4 kg | 3.8 € | |
| | | | Rapid and uniform baking |
| Breadcrumb | 1 kg | | Remains very crunchy |
| Chopped Gruyère | 0.2 kg | | |

### C. Prepare a Viennese pastry for breading a foodstuff

| *RECIPE* | Quantity | Price | OBSERVATIONS |
|---|---|---|---|
| Traditional Viennese pastry | | | Pasty preparation |
| | | | More pronounced coloration |
| Cooking dairy butter | 10 g | 0.05 € | Crunchy and then becomes moist |
| or | | | Fatty in the mouth |
| cooking oil | 8 g | 0.012 € | Fatty taste before that of the product |
| Breadcrumb | 10 g | | |
| Viennese pastry with powdered cocoa butter | | | Uniform coloration |
| | | | Very crunchy over the period |
| Powdered cocoa butter | 1 g | 0.0095 € | No fat in the mouth Clean taste |
| Breadcrumb | 10 g | | |

### D. Prepare a "shortcrust pastry"

| *RECIPE* | Quantity | Price | OBSERVATIONS |
|---|---|---|---|
| Traditional | | | |
| Water | 20 cl | AW | Nice quality |
| Salt | AW | AW | Elastic during cooking |
| Dairy butter | 0.5 kg | 2.5 € | Moistens very rapidly |
| Flour | 1 kg | 0.6 € | Not very crumbly |
| Eggs | 4 | 0.4 € | |
| With powdered cocoa butter | | | Elastic during manufacture Does not move during cooking |
| Water | 50 cl | AW | |
| Salt | AW | AW | Very crumbly in the mouth |
| Powdered cocoa butter | 0.3 kg | 2.85 € | Nice taste |
| | | | Remains dry after baking |
| Flour | 1 kg | 0.6 € | Crumbly |
| Eggs | 4 | 0.4 € | Remains dry after freezing |

Alternative recipe :
300 g dairy butter
240 g cocoa butter
5 g icing sugar
5 g liquid vanilla
250 g eggs
100 g almond powder
1000 g flour
20 g baking powder

### E. Prepare a "choux dough"

| *RECIPE* | Quantity | Price | OBSERVATIONS |
|---|---|---|---|
| Traditional | | 4.10 € | |
| Water | 1 litre | AW | Nice quality |
| Salt | 20 g | AW | Good taste |
| Dairy butter | 0.4 kg | 2 € | Moistens quickly |
| Flour | 0.6 kg | 0.45 € | Wet defrosting |
| Eggs | 16 | 1.6 € | |
| With powdered cocoa butter | | 4.70 € | |
| Water | 1 L | AW | Neutral taste |
| Salt | 20 g | AW | Cooks more quickly |
| Powdered cocoa butter | 0.3 kg | 2.85 € | Very dry end of cooking |
| | | | Remains dry for a long time |
| Flour | 0.6 kg | 0.45 € | Remains dry after defrosting |
| Eggs | 13 | 1.3 € | |
| Milk | 0.15 L | 0.1 € | |

Alternative recipe :
160 g milk
160 g water
5 g salt
15 g sugar
120 g cocoa butter
180 g flour
330 g eggs

All "choux dough" recipe can be prepared with cocoa butter. One only has to replace dairy butter by cocoa butter at a content of 80% by weight of the dairy butter content.

### Example 7: Preservation

### A. Bread a product using powdered cocoa butter before deep-freezing it; and cook deep-frozen (St. Jacques for example)

| *RECIPE* | Quantity at the beginning | Cooking T°C | *OBSERVATIONS* |
|---|---|---|---|
| Traditional | | | Remainder 0.75 kg of St. Jacques that is 7 people to be served With 150 g of cooking water Very dull coloration Boiled St. Jacques |
| St. Jacques deep-frozen plain | 1 kg | 120°C for 5 min | |
| Dairy butter | 50 g | | |
| With powdered cocoa butter | | | Remainder 0.880 kg of St. |
| St. Jacques breaded with powdered cocoa butter | 1 kg | 140°C for 5 min | Jacques that is 9 people to be served |
| | | | With 50 g of water |
| | | | Correct coloration |
| Deep-freezing Powdered cocoa butter | 30 g | | Seared St. Jacques |

### B. Bread an escalope of foie gras using powdered cocoa butter before sautéing it; or deep-freeze and sauté

| *RECIPE* | Quantity at the beginning | Cooking T°C | After cooking | *OBSERVATIONS* |
|---|---|---|---|---|
| Traditional | | | | Very rapid melting of the fat |
| Escalope of | 100 g | 180°C for | 75 g | Irregular coloration |

| foie gras | | 4 min | | Loses 25% of fat |
|---|---|---|---|---|
| | | | | |

| *RECIPE* | Quantity at the beginning | Cooking T°C | After cooking | *OBSERVATIONS* |
|---|---|---|---|---|
| With powdered cocoa butter | | | | Slow melting |
| | | | | Uniform coloration |
| | | 180°C for 4 min | 90 g | Loses 10% of fat |
| Escalope of foie gras sprinkled with powdered cocoa butter | 100 g | | | |
| | 3 g | | | |

If it is desired to provide the client with 90 g of hot foie gras in his plate:
- the order for 10 people in traditional style should be: 1.125 kg of foie gras at 35 € that is 3.93 € per portion,
- with cocoa butter: 1 kg of foie gras at 35 € = 3.5 € per portion.

### C. Precoating of vegetables with hydrated cocoa butter

The cocoa butter is hydrated 50/50 with water. A creamy paste is obtained to which an optional seasoning may be added: salt, spices, herbs and the like.

The vegetables are then coated with this paste and then preserved using various techniques, among which:
- under vacuum in hermetically sealed carton packagings,
- deep-frozen at -18°C,
- as fresh products at 5°C.

### Example 8: Preparation of a cream with a "chantilly" type texture

### A. Raspberry pulp cream

500 g of raspberry pulp
25 g of cream
25 g on average of powdered cocoa butter

The ingredients are well mixed. It is important to have no lumps in the preparation.
The preparation is poured into the siphon. Two CO₂ cartridges are introduced therein.
Shake 4 times after having put the cartridges (under pressure).
The bomb may be used.

### B. Coffee topped with an ice cream ball

Ingredients for the couverture cream:
- 500 g of strong liquid coffee
- 70 g of single cream
- 10 to 15 g of powdered cocoa butter

### Preparation of the cream:

Make a hot coffee, add powdered cocoa butter thereto and mix the whole.

Add the single cream to this preparation.

Put the appliance in a siphon, the preparation being carried out according to the preceding recipe. Place the bomb in the refrigerator.

### Preparation of the coffee topped with an ice cream ball:

Make a coffee.

Add to the surface of the coffee a layer of cream worked with a siphon.

Deposit an ice cream ball on the layer of cream. The ice cream does not melt and holds in suspension at the surface of the layer of cream.

### Example 9: "Praliné" praline-flavoured chocolate

"Praliné" is a paste containing a composition of crusted caramelised sugar and nuts, (generally almond, hazelnut, optionally walnut, peanut...).

Mix and heat slightly (30-35°C) cryogenic powdered cocoa butter to obtain a creamy texture. Add the "praliné". Mix the preparation. Cocoa butter should be introduced in the preparation at a content of 10-150 g of cocoa butter for 1 kg of "praliné".

## Claims

1. Cocoa butter flavoured by taste transfer, said transfer resulting from a
process comprising the steps of:
- heating cocoa butter to 100-170°C,
- removing it from heat,
- adding the flavouring product, and,
- keeping it therein for 5 to 15 days.

2. Composition in powder form consisting of cocoa butter according to claim 1 with spices.

3. Composition according to claim 2, **characterized in that** the spices introduced are, individually or as a mixture, salt, peppercorns, fresh herbs, dried herbs, deep-frozen fresh herbs, nuts, bark, seeds, fruit, vegetables, condiments, dehydrated sauce bases.

4. Food sprinkled with the flavoured cocoa butter according to claim 1 in powder form, or with a composition according to claim 2 or 3.

5. Process for cooking a foodstuff **characterized in that** the food is sprinkled with the flavoured cocoa butter according to claim 1 in powder form or with the composition according to claim 2 or 3, before being placed in contact with a source of heat.

## Patentansprüche

1. Kakaobutter, die durch eine Geschmacksübertragung aromatisiert wird, wobei die Geschmacksübertragung aus einem
Verfahren resultiert, welches die folgenden Schritte umfasst:
- Erhitzen der Kakaobutter auf 100-170°C,
- Entfernen der Kakaobutter von der Hitze
- Hinzufügen des aromatisierenden Produkts, und
- Belassen des Produkts in der Kakaobutter für 5-15 Tage.

2. Zusammensetzung in Puderform, bestehend aus der Kakaobutter nach Anspruch 1 mit Gewürzen.

3. Zusammensetzung nach Anspruch 2, **dadurch gekennzeichnet, dass** die beigegebenen Gewürze, einzeln oder als Mischung, Salz, Pfefferkörner, frische Kräuter, getrocknete Kräuter, tiefgefrorene frische Kräuter, Nüsse, Rinde, Samen, Früchte, Gemüse, Würzmittel, getrocknete Soßengrundlagen sind.

4. Nahrung, die mit der aromatisierten Kakaobutter nach Anspruch 1 in Pulverform bestreut ist, oder mit einer Zusammensetzung nach Anspruch 2 oder 3.

5. Verfahren zum Kochen von Nahrungsmitteln, **dadurch gekennzeichnet dass** die Nahrung mit der aromatisierten Kakaobutter nach Anspruch 1 in Pulverform bestreut ist oder mit der Zusammensetzung nach Anspruch 2 oder 3, bevor die Nahrung mit einer Hitzequelle in Kontakt kommt.

## Revendications

1. Beurre de cacao aromatisé par transfert de goût, ledit transfert résultant d'un procédé comprenant les étapes suivantes:
- chauffage du beurre de cacao à 100-170°C,
- son retrait de la chaleur,
- l'addition d'un produit aromatisant, et,
- son maintien dans celui-ci pendant 5 à 15 jours.

2. Composition sous forme de poudre constituée de beurre de cacao selon la revendication 1 avec des épices.

3. Composition selon la revendication 2, **caractérisée en ce que** les épices introduites, individuellement ou sous forme de mélange, sont du sel, du poivre, des herbes fraîches, des herbes séchées, des herbes fraîches surgelées, des noix, des écorces, des graines, des fruits, des légumes, des condiments, des fonds de sauce déshydratés.

4. Aliment saupoudré avec du beurre de cacao aromatisé selon la revendication 1 sous forme de poudre, ou avec une composition selon la revendicatian 2 ou 3.

5. Procédé de cuisson d'un produit alimentaire **caractérisé en ce que** l'aliment est saupoudré avec du beurre de cacao aromatisé selon la revendication 1 sous forme de poudre ou avec la composition selon la revendication 2 ou 3, avant d'être mis en contact avec une source de chaleur.
